# EUROPEAN PATENT SPECIFICATION

(11) **EP 2 189 371 B1**
(45) Date of publication and mention of the grant of the patent: **27.03.2013**
(21) Application number: 09176414.2
(22) Date of filing: 18.11.2009
(51) Int. Cl.: B64C 13/04, B64D 43/00

(54) **Input/steering mechanisms and aircraft control systems**
Eingabe-/Steuerungsmechanismen und Flugzeugsteuerungssysteme
Mécanismes d'entrée/direction et systèmes de contrôle d'avion

(30) Priority: 24.11.2008 US 276934
(43) Date of publication of application: 26.05.2010
(73) Proprietor: Honeywell International Inc., Morristown, NJ 07962 (US)
(72) Inventor: Gannon, Aaron, Morristown, NJ 07962-2245 (US); Suddreth, John G., Morristown, NJ 07962-2245 (US); Wilson, Blake, Morristown, NJ 07962-2245 (US)
(74) Representative: Buckley, Guy Julian

(56) References cited:
- EP-A2- 0 887 252
- DE-U1-202006 000 264
- US-A- 4 387 360
- US-B1- 6 264 146

## Description

### TECHNICAL FIELD

The inventive subject matter generally relates to aircraft, and more particularly relates to input and steering mechanisms and aircraft control systems for use on aircraft.

### BACKGROUND

US 4 387 360 discloses an input/steering mechanism suitable for use with an aircraft control system, the mechanism comprising a first panel and a first portion of an alphanumeric keyboard disposed on the first panel and adapted to receive a manual input from a user and to transmit an output signal to the aircraft control system in response to the manual input.

Aircraft typically include one or more cockpit displays, which visually present multiple categories of flight- and/or aircraft-related data from a flight control system. In some cases, the flight crew may be prompted by the displays to provide additional data or inputs to the flight control system. In response, the flight crew may manually input data into the system by typing the data into an input device, such as a keyboard, or by using a cursor control device (e.g., a mouse or trackball) that may be communicatively coupled to the system. Typically, the input devices are located adjacent to the displays such that a pilot or co-pilot may need to remove his hand from the yoke to operate the input device. As the number of components in the aircraft cockpit and the density of information presented on the displays continues to increase, improved systems are desirable that reduce effort of the flight crew with interacting with the displays and the flight control system.

Accordingly, it is desirable to have a simplified system for a flight crew to input data or provide inputs into a flight control system. In addition, it is desirable to for the system to be relatively inexpensive to implement into new and existing aircraft. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

Input/steering mechanisms and aircraft control systems are provided.

In an embodiment, by way of example only, an input/steering mechanism is provided for use with an aircraft control system. The input/steering mechanism includes a handlebar, a first panel extending from the handlebar, and a first portion of an alphanumeric keyboard disposed on the panel and adapted to receive a manual input from a user and to transmit an output signal to the aircraft control system in response to the manual input.

In another embodiment, by way of example only, the aircraft control system includes an input/steering mechanism, a processor, and a display. The input/steering mechanism includes a handlebar, a first panel extending from the handlebar, and a first portion of an alphanumeric keyboard disposed on the panel and adapted to receive a manual input from a user and to transmit a first output signal to the aircraft control system in response to the manual input. The processor is operable communication with the input/steering mechanism and is adapted to receive the first output signal from the input/steering mechanism and to produce a second output signal in response to the first output signal. The display is in operable communication with the processor and is adapted to display an image in response to the second output signal from the processor.

### BRIEF DESCRIPTION OF THE DRAWINGS

The inventive subject matter will hereinafter be described in conjunction with the following drawing figures, wherein like numerals denote like elements, and

FIG. 1 is a functional block diagram of an aircraft control system, according to an embodiment; and

FIG. 2 is a simplified view of a yoke that may be implemented into the system shown in FIG. 1, according to an embodiment.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

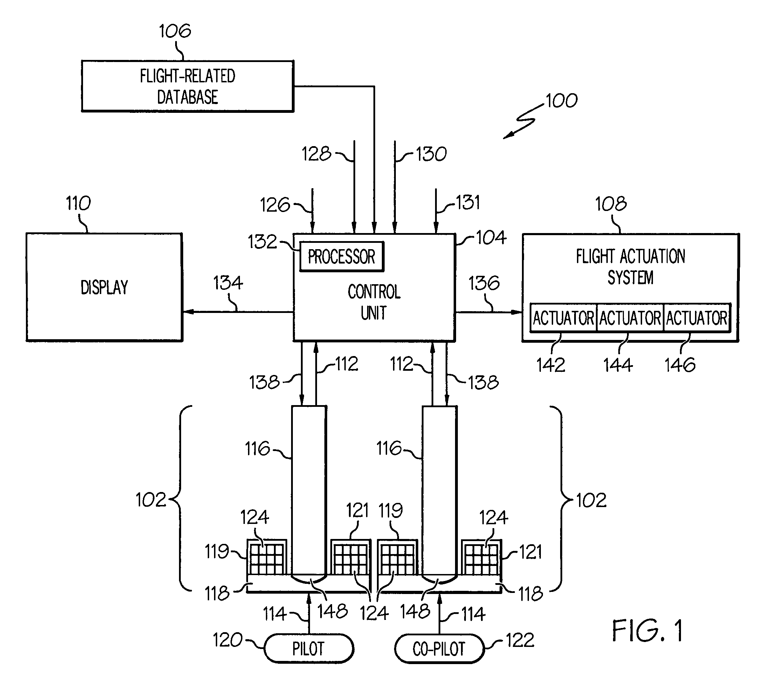

FIG. 1 is a functional block diagram of an aircraft control system 100, according to an embodiment. The aircraft control system 100 includes one or more user input/steering mechanisms 102, a control unit 104, a flight-related database 106, a flight actuation system 108, and a display device 110. The one or more user input/steering mechanisms 102 are adapted to supply a flight control surface position control signal 112 to the control unit 104 and to allow a user (e.g., a pilot 120 or a co-pilot 122) to provide a user input 114 to the control unit 104. In an embodiment, the user input 114 may be a manual input to steer the aircraft in a particular direction. In such case, each user input/steering mechanism 102 may be made up of a steering mechanism 116 and a handlebar 118 coupled thereto. The steering mechanism 116 may be configured to move in various directions to allow the user to provide directional movement commands to the control unit 104. For example, the steering mechanism 116 may be rotatably movable, axially movable, and radially movable. In other embodiments, the steering mechanism 116 may be configured to move in other directions and manners. In this regard, the steering mechanism 116 may be a steering column, flight stick, joystick, or other movable device.

The handlebar 118 is disposed on the steering mechanism 116 and is adapted to provide a gripping area for the user to provide a manual input to the steering mechanism 116. As used herein, the term "disposed on" may be defined a physically included on, projected onto, or displayed on. In an embodiment, the handlebar 118 may be attached to the steering mechanism 116 such that movement of the handlebar 118 is directly translated thereto. Thus, when the user rotates or axially or radially moves the handlebar 118, the steering mechanism 116 exhibits a corresponding movement. In another embodiment, the handlebar 118 may be rotationally coupled to the steering mechanism 116. In such case, the user may rotate the handlebar 118 about a longitudinal axis through the steering mechanism 116 to cause the aircraft to bank left or right, or the user may pull up or push down on the handlebar 118 to cause the steering mechanism 116 to move axially or radially to impart another directional movement to the aircraft.

In another embodiment, the user input 114 may include a manual entry of textual and/or numerical data by the user. In this regard, the handlebar 118 also may include at least a portion of an alphanumeric keyboard 124 thereon that allows the user to input such data to the system 100. The alphanumeric keyboard 124 is implemented as part of the handlebar 118 and is disposed such that keystrokes may be made primarily using the user's thumbs and/or fingers, in an embodiment.

Although the input/steering mechanism 102 used by both the pilot 120 and the co-pilot 122 are shown in FIG. 1 as being substantially identical to each other, they may not be in other embodiments. For example, the steering mechanism 116 used by the pilot 120 may include a steering column, while the steering mechanism 116 used by the co-pilot 122 may include a flight stick. In another embodiment, more than two input/steering mechanisms 102 may alternatively be included. In other embodiments, an aircraft may include a single input/steering mechanism 102, as the aircraft may not include an area for a co-pilot 122.

In addition to receiving user inputs 114, the control unit 104 also may be adapted to receive a plurality of signals representing real-time aircraft conditions. For example, the real-time aircraft condition signals may include airspeed indicator signals 126, aircraft altitude indicator signals 128, and aircraft attitude indicator signals 130. In other embodiments, the real-time aircraft condition signals may include data related to conditions surrounding the aircraft, or "aircraft flight envelope" signals 131. Examples of aircraft flight envelope data include, but are not limited to, temperature and aircraft autoflight/autothrottle mode. In any event, one or more of the real-time aircraft condition signals may be supplied from sensors (not shown) that may be disposed on the aircraft and are dedicated to the system 100 or shared with other systems in the aircraft, or supplied via one or more data buses within the aircraft.

The control unit 104 is further adapted to process one or more of the input signals 112, 126, 128, 130, 131 in order to provide one or more output signals 134, 136, 138 that are communicated to the user via the display device 110 or the input/steering mechanism 102 or to the flight actuation system 108. In this regard, the control unit 104 may include at least a processor 132 that is in operable communication with the display device 110, the input/steering mechanism 102, and the flight actuation system 108. The processor 132 may be any one of numerous known general-purpose microprocessors or an application specific processor that operates in response to program instructions. In an embodiment, the processor 132 includes on-board RAM (random access memory) and on-board ROM (read only memory). The program instructions executed on the processor 132 may be stored in either or both the RAM and the ROM. For example, the operating system software may be stored in the ROM, whereas various operating mode software routines and various operational parameters may be stored in the RAM. It will be appreciated that this is merely exemplary of one scheme for storing operating system software and software routines, and that various other storage schemes may be implemented. It will also be appreciated that the processor 132 may be implemented using various circuits other than a programmable processor. For example, digital logic circuits and analog signal processing circuits could also or alternatively be used.

In an embodiment, the processor 132 may include program instructions to obtain data that may not be provided by the input signals 112, 126, 128, 130, 131, if such additional data is needed to determine an output signal. In one example, the processor 132 may be in operable communication with the flight-related database 106 and configured, in response to the input signals 112, 126, 128, 130, 131, to selectively retrieve data therefrom. The flight-related database 106 may include various types of data such as terrain data, including elevation data representative of the terrain over which the aircraft is flying. The flight-related database 106 also, or alternatively may include various types of navigation-related data such as various flight plan related data including, for example, waypoints, distances between waypoints, headings between waypoints, data related to different airports, navigational aids, obstructions, special use airspace data, political boundary data, communication frequencies, and aircraft approach information, among other things. Although the flight-related database 106 is shown as a single database separate from the processor 132, in other embodiments, the flight-related database 106 may include separate databases, all or portions of the database 106 could be loaded into the on-board RAM or ROM, integrally included in the processor 132, and/or other RAM, and/or ROM. In another embodiment, the flight-related database 106 could be included as part of a device or system that is physically remote from the aircraft control system 100.

Based on the input signals 112, 126, 128, 130, 131 and/or retrieved data, the processor 132 may provide an output signal 134 to the display device 110 to display various images and data, in both a graphical and a textual format and to thereby supply visual feedback to the user, in an embodiment. The display device 110 may be any one of numerous known displays suitable for rendering image and/or text data in a format viewable by the user. Suitable examples of such displays include, but are not limited to various cathode ray tube (CRT) displays, and various flat panel displays (e.g., various types of LCD (liquid crystal display) and TFT (thin film transistor) displays). The display device 110 may additionally be based on a panel mounted display, a head-up display projection, or other known display technologies.

In another embodiment, the processor 132 may receive an input signal 112 from the input/steering mechanism 102 to provide an output signal 136 to the flight actuation system 108. For example, the processor 132, and hence the control unit 104, may be configured to supply a power output signal 136 to appropriate primary flight control surface actuators 142, 144, 146 that may make up part of the flight actuation system 108. The actuators 142, 144, 146, in response, may move a control surface to an appropriate position, to thereby implement a desired directional movement of the aircraft.

In yet another embodiment, the control unit 104 may supply an output signal, shown in FIG. 1 as a feedback signal 138, to the input/steering mechanism 102. The feedback signal 138 may be used to prompt the pilot 120 or co-pilot 122 to provide a particular reaction, such as providing an additional input to the system 100. For example, in an embodiment, the input/steering mechanism 102 (e.g., either the steering mechanism 116 or the handlebar 118) may include a tactile generator 148 that is in operable communication with the processor 132 and is adapted to vibrate or otherwise provide a physical disturbance to a user, in response to the feedback signal 138. If included in the steering mechanism 116, the tactile generator 148 may cause the steering mechanism 116 to vibrate. If included in the handlebar 118, the tactile generator 148 may cause a portion of the handlebar 118 to vibrate, or may cause a surface of the handlebar 118 to move or change texture. Thus, when, for instance, the user's palm or thumb is in physical contact with the surface of the handlebar 118, the user's palm or thumb may experience a tactile sensation that the user may recognize as a prompt to react. The physical disturbance may vary in magnitude, based on a position of the steering mechanism 116 or the handlebar 118 or on the aircraft conditions as represented by each of the received aircraft condition signals 112, 126, 128, 130, 131.

In embodiments in which the user may be prompted to supply additional information, the user may do so using the alphanumeric keyboard 124, which as mentioned above may be positioned on the handlebar 118. The handlebar 118 may be configured to serve as a wrist rest for the user, while keystrokes are made by the user's fingers and thumbs during input. The alphanumeric keyboard 124 may include a QWERTY-based keyboard, in an embodiment. A QWERTY-based keyboard may be a standard arrangement in which the characters of Roman script are laid out. In another embodiment, the alphanumeric keyboard 124 also may include a numerical keypad incorporated into or disposed adjacent to the QWERTY-based keyboard.

In yet another embodiment, the alphanumeric keyboard 124 may be a physical keyboard that is configured to extend from the handlebar 118 on a side of the handlebar 118 that is away from the user. In still another embodiment, a means for displaying at least a portion of a virtual keyboard on panels 119, 121 extending from the handlebar 124 and a means for sensing movement of a user's thumb or hand across the virtual keyboard to produce the input signal 112 may be included to form a virtual keyboard. In an embodiment, the means for displaying may be projected, such as via a rear projector or a front projector, onto surfaces of the panels 119, 121. In another embodiment, the means for displaying may include a touchscreen, such as a liquid crystal display having a touch sensors embedded therein, that displays the virtual keyboard. In another embodiment, the means for sensing movement may include one or more optical sensors embedded in, coupled to, or disposed proximate to the handlebar 118. In an embodiment, the optical sensors may further operate with one or more image-rendering screens or other devices for providing an image of alphanumeric keys on the handlebar panels 119, 121. In such case, the means for displaying at least a portion of the virtual keyboard may be further adapted to project the virtual keyboard such that the virtual keyboard moves relative to a movement of the handlebar 118, in an embodiment. In another embodiment, the means for displaying at least a portion of the virtual keyboard may be further adapted to project the virtual keyboard such that the virtual keyboard does not move relative to a movement of the handlebar.

Additionally, or alternatively, the image of alphanumeric keys may be rendered on the display device 110. In an embodiment, the optical sensors may cause the image-rendering screens or other devices for providing the alphanumeric keys on the handlebar panels 119, 121 or on the display device 110 to render an entire alphanumeric keyboard or a portion of the keyboard, such as particular keys over which the user's thumbs or fingers are disposed, in order to conserve display space. In some embodiments, a user may place his or her fingers over each key, and in an embodiment, each key over which a finger is placed may be displayed in a particular color, shape, or size associating a particular finger and a particular displayed key. To further conserve display space, the means for displaying at least a portion of the virtual keyboard may be toggled with a means for displaying at least a portion of an instrument panel. For example, the user may select a keyboard mode in which the means for displaying at least a portion of the virtual keyboard projects the keyboard, and an instrument mode in which the means for displaying at least a portion of an instrument panel displays the instrument panel.

Similar to the virtual keyboard, the instrument panel may be displayed either on the handlebar panels 119, 121 or on the display device 110. In an embodiment in which the instrument panel is displayed on the handlebar panels 119, 121, the means for displaying at least a portion of the instrument panel may be further adapted to project the instrument panel such that it remains in position despite rotational movement of the handlebar. In yet another embodiment, the means for displaying at least a portion of the virtual keyboard may be toggled with a means for displaying shortcut keys. As used herein, a shortcut key may be a physical or virtual button that indicates a function that may be useful to the user, such as a "Direct To", "Show", "Nav", "Com", or other function button. When the shortcut key is selected by the user, the means for displaying at least a portion of the instrument panel may generate and display an image corresponding to the shortcut key on the handlebar panels 119, 121 or the display device 110. In an example, the user may select a shortcut key mode in which the means for displaying the shortcut keys displays one or more shortcut keys on the handlebar panels 119, 121 or the display device 110. In another embodiment, toggling may be achieved by providing a physical or virtual hotkey button.

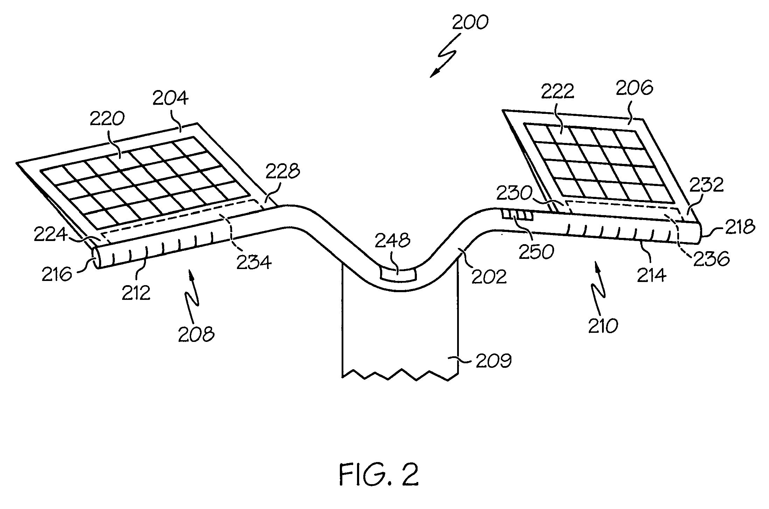

FIG. 2 is a simplified top view of a portion of an input/steering mechanism 200 that may be implemented into the system shown in FIG. 1, according to an embodiment. In an embodiment, the input/steering mechanism 200 includes a handlebar 202 and two panels 204, 206. The handlebar 202 may be made of a material suitable for maintaining structural integrity upon application of a force from the user to move or rotate the handlebar 202. Suitable materials include, but are not limited to, metals, plastics, nylons or other natural or synthetic materials. In some embodiments, the handlebar 202 may be a relatively straight bar, or in other embodiments, the handlebar 202 may be curved. In one example, the handlebar 202 may have two sections 208, 210 and each section 208, 210 may be curved. According to an embodiment, the handlebar 202 may have a length in a range of from about 0.2 m to about 0.35 m. In other embodiments, the handlebar 202 may be longer or shorter than the aforementioned length range. In another embodiment, the handlebar 202 may have a diameter that is in a range of from about 1 to about 4 cm. In yet other embodiments, the handlebar 202 may have a larger or a smaller diameter than the aforementioned range, however the diameter may be selected to allow the user to grip the handlebar 202.

According to an embodiment, the handlebar 202 may be mounted to a steering column 209. In this way, the handlebar 202 may be used to affect movement of an aircraft via the steering column 209. To provide ease of steering to the user, the handlebar 202 may be mounted such that each section 208, 210 is disposed on opposite sides of the steering column 209. In an embodiment, lengths of each section 208, 210 may be substantially equal to each other. In another embodiment, a length of one section 208 may be longer than or shorter than a length of the other section 210.

The handlebar 202 includes grip surfaces 212, 214, in an embodiment. In accordance with an embodiment, a first grip surface 212 may be formed along a first portion of the length of the handlebar 202 and may be contoured to correspond with one or more fingers and/or a thumb of a user. In an embodiment, the first grip surface 212 may correspond with one or more fingers of a left hand of the user. A second grip surface 214 may be formed along a second portion of the length of the handlebar 202 and may be contoured to correspond with one or more fingers and/or a thumb of the user. In an embodiment, the second grip surface 214 may correspond with one or more fingers of a right hand of the user. For example, the first and second grip surfaces 212, 214 may be included on each section 208, 210, respectively.

In accordance with an embodiment, the grip surfaces 212, 214 may be formed into a material from which the handlebar 202 is made. In another embodiment, sleeves may be included over each end 216, 218 of the handlebar 202 and the grip surfaces 212, 214 may be formed on the sleeves. According to an embodiment, the sleeves may be made of a material that is relatively soft to the user's touch to provide comfort to the user, or may be made of an elastomeric material to increase an ability of the user to grip the handlebar 202. For example, the sleeve may comprise materials such as rubber, plastic or other synthetic material. In another embodiment, the grip surfaces 212, 214 may be formed on extensions of the handlebar 202, such that the grip surfaces 212, 214 may also act as a wrist rest.

The panels 204, 206 extend from the handlebar 202, and in an embodiment, the panels 204, 206 may extend away from the grip surfaces 212, 214. In an embodiment, the panels 204, 206 may be spaced apart from the handlebar 202 and may be attached thereto via spaced apart mount flanges 224, 228, 230, 232 (shown in phantom). In such case, a gap 234, 236 (shown in phantom) may be present between the panels 204, 206 and the handlebar 202. Thus, when the user grips the grip surfaces 212, 214, the user's fingers may wrap around the handlebar 202 by being inserted into the gaps 234, 236. In another embodiment, the panels 204, 206 are separated from each other by a distance. In an embodiment, the distance may be in a range of from about 0.0 cm to about 0.3 cm. In other embodiments, the distance may be greater or less than the aforementioned range. In accordance with an embodiment, the panels 204, 206 may be integrally formed as part of the handlebar 202. In another embodiment, the panels 204, 206 may be separate components that are mounted to the handlebar 202.

According to an embodiment, the panels 204, 206 may be employed to include portions of an alphanumeric keyboard. In particular, the alphanumeric keyboard may be split and placed on each panel 204, 206. In an embodiment, a first and a second portion 220, 222 of the alphanumeric keyboard may be adapted to receive a manual input from a user and to transmit an output signal to the aircraft control system in response to the manual input. In an embodiment, each portion 220, 222 of the alphanumeric keyboard may include approximately one half of a keyboard. Additionally, each portion 220, 222 may include a space bar of the keyboard and/or may include duplicate "CTRL", "FN" or ALT" keys, in an embodiment. In another embodiment, each portion 220, 222 of the alphanumeric keyboard may include fewer than half of the keys of the keyboard.

Each portion 220, 222 may include a portion of a physical keyboard, in an embodiment. Alternatively, the first portion 220 of the alphanumeric keyboard may comprise a means for displaying a first portion of a virtual keyboard on the first panel 204 and a means for sensing movement of the thumb and fingers of the left hand across the first portion 220 of the virtual keyboard to produce a left hand output signal. The second portion 222 of the alphanumeric keyboard comprises a means for displaying a second portion of a virtual keyboard on the second panel 206 and a means for sensing movement of the thumb and fingers of the right hand across the second portion of the virtual keyboard to produce a right hand output signal, in an embodiment. The means for displaying the first and second portions of the virtual keyboard may include rear projectors that project images of the first and second portions 220, 222 of the virtual keyboard onto surfaces of the first and second panels 204, 206, in an embodiment. In another embodiment, the means for displaying may include front projectors that project images of the first and second portions 220, 222 of the virtual keyboard onto surfaces of the first and second panels 204, 206. According to another embodiment, the means for displaying may include touchscreens, which may include a liquid crystal display and touch sensors embedded in the liquid crystal display. In another embodiment, the processor 132 (FIG. 1) may be further adapted to receive the left hand output signal from the means for displaying the first portion of the virtual keyboard and to produce a third output signal in response thereto and to receive the right hand output signal from the means for displaying the second portion of the virtual keyboard and to produce a fourth output signal in response thereto, in an embodiment. The third and fourth output signals may be used to display the virtual keyboard portions either on the first and second panels 204, 206, according to an embodiment. In another embodiment, the display device 110 (FIG. 1) may be adapted to display an image in response to the third output signal and the fourth output signal, wherein the third output signal comprises a command to display an image including a portion of the first portion of the virtual keyboard over which the thumb and/or fingers of the left hand are disposed and the fourth output signal comprises a command to display an image including a portion of the second portion of the virtual keyboard over which the thumb and/or fingers of the right hand are disposed.

In another embodiment, the handlebar 202 may include a tactile generator 248. The tactile generator 248 may operate similar to the tactile generator 148 described in conjunction with FIG. 1, in an embodiment. According to another embodiment, the tactile generator 248 may be disposed on the handlebar 202. For example, the tactile generator 248 may be disposed between the first and the second sections 208, 210 between the first and second grip surfaces 212, 214, as shown in FIG. 2. In other embodiments, the tactile generator 248 may be disposed on the first section 208 or on the second section 210. In still other embodiments, the tactile generator 248 may be embedded within the handlebar 202 or located elsewhere.

In still another embodiment, the handlebar 202 may include may include a user input device 250 adapted to translate a two-dimensional motion of a device to an output signal is included. In an embodiment, the input device 250 is a disposed on the handlebar 202 between the grip surfaces 212, 214. In another embodiment, the input device 250 may be a cursor control device, such as a track-button mouse. Alternatively, the input device 250 may include a touchpad.

Aircraft control systems have now been provided that reduce effort of the flight crew in interacting with the displays and the flight control system on an aircraft. The systems simplify a means by which the flight crew inputs data into a flight control system. Additionally, the input/steering mechanisms described above may be relatively inexpensive and simple to implement into new and existing aircraft.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. An input/steering mechanism (102, 200) for use with an aircraft control system (100), the input/steering mechanism (102, 200) comprising:
a handlebar (118, 202);
a first panel (119, 121, 204, 206) extending from the handlebar (118, 202); and
a first portion of an alphanumeric keyboard (124) disposed on the first panel (119, 121, 204, 206) and adapted to receive a manual input from a user and to transmit an output signal to the aircraft control system in response to the manual input.

2. The input/steering mechanism (102, 200) of claim 1, further comprising:
a steering mechanism (116) to which the handlebar (118, 202) is mounted, the steering mechanism (116) capable of a rotational motion, an axial motion, and a radial motion, and adapted to produce an output signal in response to the motion and to transmit the output signal to the aircraft control system (100).

3. The input/steering mechanism (102, 200) of claim 1, further comprising:
a first grip surface (212) formed along a first portion of a length of the handlebar (118, 202) and contoured to correspond with one or more fingers of a left hand of the user; and
a second grip surface (214) formed along a second portion of the length of the handlebar (118, 202), the second grip surface contoured to correspond with one or more fingers of a right hand of the user.

4. The input/steering mechanism (102, 200) of claim 3, further comprising:
a second panel (202, 204) extending from the handlebar (118, 202) away from the second grip surface (214),
wherein a second portion (220, 222) of the alphanumeric keyboard (124) is disposed on the second panel (202, 204).

5. The input/steering mechanism (102, 200) of claim 1, further comprising an input device (250) disposed on the handlebar (118, 202) adjacent to the first portion (220, 222) of the alphanumeric keyboard, the input device adapted to translate a two-dimensional motion of the input device (250) to an output signal.

6. The input/steering mechanism (102, 200) of claim 1, wherein the at least a first portion (220, 222) of the alphanumeric keyboard (124) comprises at least a portion of a QWERTY-based keyboard.

7. The input/steering mechanism (102, 200) of claim 1, wherein the at least a first portion (220, 222) of the alphanumeric keyboard (124) comprises a means for displaying at least a portion of a virtual keyboard on the face of the handlebar and a means for sensing movement of one or more of the fingers across the portion of the virtual keyboard to produce the output signal.

8. The input/steering mechanism (102, 200) of claim 7, wherein the means for displaying at least a portion of the virtual keyboard is further adapted to project the virtual keyboard such that the virtual keyboard moves relative to a movement of the handlebar (118, 202).

9. The input/steering mechanism (102, 200) of claim 7, wherein the means for displaying at least a portion of the virtual keyboard is further adapted to project the virtual keyboard such that the virtual keyboard does not move relative to a movement of the handlebar (118, 202).

10. The input/steering mechanism (102, 200) of claim 1, further comprising a tactile generator (248) adapted to provide a physical disturbance to a user, the tactile generator (248) disposed on the handlebar (118, 202).

## Patentansprüche

1. Eingabe-/Steuerungsmechanismus (102, 200) zur Verwendung mit einem Flugzeugsteuerungssystem (100), wobei der Eingabe-/Steuerungsmechanismus (102, 200) Folgendes umfasst:
einen Lenker (118, 202);
eine erste Tafel (119, 121, 204, 206), die sich vom Lenker (118, 202) aus erstreckt; und
einen ersten Abschnitt einer alphanumerischen Tastatur (124), die sich auf der ersten Tafel (119, 121, 204, 206) befindet und so ausgeführt ist, dass sie eine manuelle Eingabe von einem Benutzer aufnimmt und in Reaktion auf die manuelle Eingabe ein Ausgabesignal an das Flugzeugsteuerungssystem überträgt.

2. Eingabe-/Steuerungsmechanismus (102, 200) nach Anspruch 1, der weiterhin Folgendes umfasst:
einen Steuerungsmechanismus (116), an dem der Lenker (118, 202) montiert ist, wobei der Steuerungsmechanismus (116) eine Drehbewegung, eine axiale Bewegung und eine radiale Bewegung durchführen kann und so ausgeführt ist, dass er ein Ausgabesignal in Reaktion auf die Bewegung erzeugt und das Ausgabesignal an das Flugzeugsteuerungssystem (100) überträgt.

3. Eingabe-/Steuerungsmechanismus (102, 200) nach Anspruch 1, der weiterhin Folgendes umfasst:
eine erste Grifffläche (212), die entlang einem ersten Abschnitt einer Länge des Lenkers (118, 202) ausgebildet und so konturiert ist, dass sie einem oder mehreren Fingern einer linken Hand des Benutzers entspricht; und
eine zweite Grifffläche (214), die entlang einem zweiten Abschnitt der Länge des Lenkers (118, 202) ausgebildet ist, wobei die zweite Grifffläche so konturiert ist, dass sie einem oder mehreren Fingern einer rechten Hand des Benutzers entspricht.

4. Eingabe-/Steuerungsmechanismus (102, 200) nach Anspruch 3, der weiterhin Folgendes umfasst:
eine zweite Tafel (202, 204), die sich vom Lenker (118, 202) aus weg von der zweiten Grifffläche (214) erstreckt,
wobei sich ein zweiter Abschnitt (220, 222) der alphanumerischen Tastatur (124) auf der zweiten Tafel (202, 204) befindet.

5. Eingabe-/Steuerungsmechanismus (102, 200) nach Anspruch 1, der weiterhin eine Eingabevorrichtung (250) umfasst, die sich am Lenker (118, 202) angrenzend an den ersten Abschnitt (220, 222) der alphanumerischen Tastatur befindet, wobei die Eingabevorrichtung so ausgeführt ist, dass sie eine zweidimensionale Bewegung der Eingabevorrichtung (250) auf ein Ausgabesignal überträgt.

6. Eingabe-/Steuerungsmechanismus (102, 200) nach Anspruch 1, bei dem der mindestens eine erste Abschnitt (220, 222) der alphanumerischen Tastatur (124) mindestens einen Abschnitt einer QWERTY-basierten Tastatur umfasst.

7. Eingabe-/Steuerungsmechanismus (102, 200) nach Anspruch 1, bei dem der mindestens eine erste Abschnitt (220, 222) der alphanumerischen Tastatur (124) ein Mittel zum Anzeigen von mindestens einem Abschnitt einer virtuellen Tastatur an der Frontfläche des Lenkers sowie ein Mittel zum Abfühlen der Bewegung von einem oder mehreren der Finger über den Abschnitt der virtuellen Tastatur umfasst, um das Ausgabesignal zu erzeugen.

8. Eingabe-/Steuerungsmechanismus (102, 200) nach Anspruch 7, bei dem das Mittel zum Anzeigen von mindestens einem Abschnitt der virtuellen Tastatur weiterhin so ausgeführt ist, dass die virtuelle Tastatur so projiziert wird, dass sich die virtuelle Tastatur im Verhältnis zu einer Bewegung des Lenkers (118, 202) bewegt.

9. Eingabe-/Steuerungsmechanismus (102, 200) nach Anspruch 7, bei dem das Mittel zum Anzeigen von mindestens einem Abschnitt der virtuellen Tastatur weiterhin so ausgeführt ist, dass die virtuelle Tastatur so projiziert wird, dass sich die virtuelle Tastatur im Verhältnis zu einer Bewegung des Lenkers (118, 202) nicht bewegt.

10. Eingabe-/Steuerungsmechanismus (102, 200) nach Anspruch 1, der weiterhin einen Tastgenerator (248) umfasst, der so ausgeführt ist, dass an einen Benutzer ein fühlbares Störsignal übermittelt wird, wobei sich der Tastgenerator (248) am Lenker (118, 202) befindet.

## Revendications

1. Mécanisme d'entrée/de direction (102, 200) destiné à être utilisé avec un système (100) de commande d'aéronef, le mécanisme d'entrée/de direction (102, 200) comprenant :
un guidon (118, 202) ;
un premier panneau (119, 121, 204, 206) qui s'étend depuis le guidon (118, 202) ; et
une première partie d'un clavier alphanumérique (124) disposée sur le premier panneau (119, 121, 204, 206) et conçue pour recevoir une entrée manuelle d'un utilisateur et pour transmettre un signal de sortie au système de commande d'aéronef en réponse à l'entrée manuelle.

2. Mécanisme d'entrée/de direction (102, 200) selon la revendication 1, comprenant en outre :
un mécanisme de direction (116) sur lequel le guidon (118, 202) est monté, le mécanisme de direction (116) étant apte à effectuer un mouvement de rotation, un mouvement axial et un mouvement radial, et conçu pour produire un signal de sortie en réponse au mouvement et pour transmettre le signal de sortie au système (100) de commande d'aéronef.

3. Mécanisme d'entrée/de direction (102, 200) selon la revendication 1, comprenant en outre :
une première surface de saisie (212) formée le long d'une première partie d'une longueur du guidon (118, 202) et profilée de manière à correspondre à un ou plusieurs doigts d'une main gauche de l'utilisateur ; et
une deuxième surface de saisie (214) formée le long d'une deuxième partie de la longueur du guidon (118, 202), la deuxième surface de saisie étant profilée de manière à correspondre à un ou plusieurs doigts d'une main droite de l'utilisateur.

4. Mécanisme d'entrée/de direction (102, 200) selon la revendication 3, comprenant en outre :
un deuxième panneau (202, 204) qui s'étend depuis le guidon (118, 202) à l'écart de la deuxième surface de saisie (214),
une deuxième partie (220, 222) du clavier alphanumérique (124) étant disposée sur le deuxième panneau (202, 204).

5. Mécanisme d'entrée/de direction (102, 200) selon la revendication 1, comprenant en outre un dispositif d'entrée (250) disposé sur le guidon (118, 202) en position adjacente à la première partie (220, 222) du clavier alphanumérique, lequel dispositif d'entrée est conçu pour convertir un mouvement dans deux dimensions du dispositif d'entrée (250) en un signal de sortie.

6. Mécanisme d'entrée/de direction (102, 200) selon la revendication 1, dans lequel l'au moins une première partie (220, 222) du clavier alphanumérique (124) comprend au moins une partie d'un clavier de type QWERTY.

7. Mécanisme d'entrée/de direction (102, 200) selon la revendication 1, dans lequel l'au moins une première partie (220, 222) du clavier alphanumérique (124) comprend un moyen pour afficher au moins une partie d'un clavier virtuel sur la face du guidon et un moyen pour détecter un mouvement d'au moins un des doigts en travers de la partie du clavier virtuel afin de produire le signal de sortie.

8. Mécanisme d'entrée/de direction (102, 200) selon la revendication 7, dans lequel le moyen pour afficher au moins une partie du clavier virtuel est en outre conçu pour projeter le clavier virtuel de manière à ce que le clavier virtuel suive un mouvement du guidon (118, 202).

9. Mécanisme d'entrée/de direction (102, 200) selon la revendication 7, dans lequel le moyen pour afficher au moins une partie du clavier virtuel est en outre conçu pour projeter le clavier virtuel de manière à ce que le clavier virtuel ne suive pas un mouvement du guidon (118, 202).

10. Mécanisme d'entrée/de direction (102, 200) selon la revendication 1, comprenant en outre un générateur tactile (248) conçu pour procurer une perturbation physique à l'utilisateur, lequel générateur tactile (248) est disposé sur le guidon (118, 202).
